# EUROPEAN PATENT SPECIFICATION

(11) **EP 0 571 680 B1**
(45) Date of publication and mention of the grant of the patent: **26.02.1997**
(21) Application number: 92311306.2
(22) Date of filing: 10.12.1992
(51) Int. Cl.: C02F 11/12

(54) **Method of dewatering sludge**
Verfahren zur Schlammentwässerung
Procécé pour l'assèchement des boues

(30) Priority: 22.05.1992 JP 155832/92
(43) Date of publication of application: 01.12.1993
(73) Proprietor: FUKOKU KOGYO CO. LTD., Tokyo (JP)
(72) Inventor: Sato, Hachiro, Katsushika-ku, Tokyo (JP)
(74) Representative: Bibby, William Mark

(56) References cited:
- PATENT ABSTRACTS OF JAPAN vol. 12, no. 005 (C-467)1 August 1988
- DATABASE WPIL Section Ch, Week 5085, Derwent Publications Ltd., London, GB; Class D15, AN 85-314983

## Description

### Field of the Invention

The present invention relates to a method of dewatering sludge wastes discharged from various factories such as paper pulp factory, chemical factory and food factory.

Heretofore, sludge wastes of the paper industry has been treated in the following manner. The sludge wastes are first supplied to a clarifier to settle solid substances, and then a settled sludge is introduced into an agglutinating reaction tank to which a macromolecular agglutinating agent is also supplied by such an amount that it is substantially proportional to an amount of the introduced sludge. Next, the thus agglutinated sludge is supplied to a dewatering device such as a screw press and a dewatered solid substances are discharged or burned at a predetermined waste treating site.

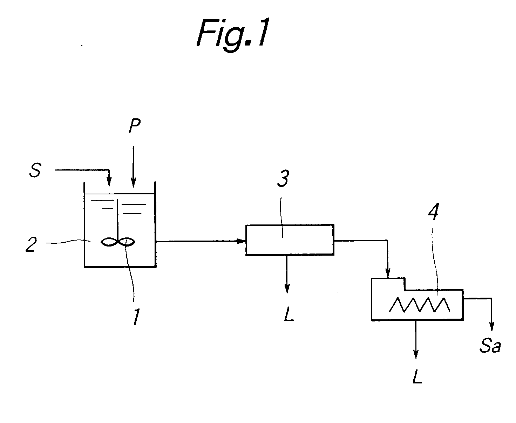

Fig. 1 is a schematic view showing a known sludge treating system for performing the known sludge treating method. A settled sludge S discharged from the above mentioned clarifier is supplied into an agglutinating reaction tank 2 having an agitator 1 installed therein. Into the agglutinating reaction tank 2 an agglutinating agent consisting of various kinds of macromolecular substances is supplied to carry out the agglutinating reaction. Then the agglutinated sludge is supplied via a preliminary dewatering device 3 to a main dewatering device 4 formed by a screw press. Solid substances, i.e. a dewatered cake Sa is burned or discharged at a waste treating site and a waste water L discharged out of the screw press 4 is supplied to the clarifier 2. A supernatant in the clarifier 2 is discharged out of the sludge treating system.

In the known pulp sludge treating system, the macromolecular agglutinating agent is supplied into the clarifier 2 by such an amount that it is proportional to a total amount of the pulp sludge supplied from the factory into the agglutinating reaction tank, otherwise the dewatering efficiency might be decreased. Therefore, a large amount of the expensive agglutinating agent has to be introduced into the agglutinating reaction tank 2, and the running cost for treating the sludge is liable to be high. Particularly, in the paper pulp factory a very large amount of the sludge is produced and thus a very large amount of the macromolecular agglutinating agent is used. This causes a serious problem.

JP-A-60221200 discloses a similar sludge treatment system in which the initial sludge wastes are mixed with an agglutinating agent in an agglutinating reaction tank and the resultant agglutinated sludge wastes are dewatered in a primary dewatering device. More agglutinating agent is added to the dewatered sludge produced at the output from the primary dewatering device.

The present invention has for its object to provide a novel and useful method of dewatering sludge wastes discharged out of a factory, in which an amount of necessary macromolecular agglutinating agent can be reduced materially without decreasing the dewatering efficiency.

According to the invention, a method of dewatering sludge wastes comprises the step of:
supplying the sludge wastes into a preliminary dewatering device to obtain a preliminarily dewatered sludge;
supplying said preliminarily dewatered sludge discharged out of said preliminary dewatering device into a main dewatering device;
supplying a waste water discharged out of said preliminary dewatering means and a waste water discharged out of said main dewatering device into an agglutinating reaction tank;
supplying a macromolecular agglutinating agent into said agglutinating reaction tank to form an agglutinated sludge; and
dewatering said agglutinated sludge formed in said agglutinating reaction tank by supplying it into said main dewatering device or another main dewatering device.

In the method according to the invention, the raw sludge wastes are processed by the preliminary and main dewatering devices successively to discharge a substantial amount of liquids contained in the raw sludge wastes and the water wastes discharged from the preliminary and main dewatering devices are introduced into the agglutinating reaction tank. Therefore, an amount of the macromolecular agglutinating agent can be greatly reduced.

### Brief Description of the Drawings

Fig. 1 is a schematic view showing a known sludge waste treating system;
Fig. 2 is a schematic view illustrating a principal construction of a system for performing the sludge waste treating method according to the invention; and
Fig. 3 is a schematic view depicting a construction of a system for carrying out an embodiment of the sludge treating method according to the invention.

### Description of the Preferred Embodiments

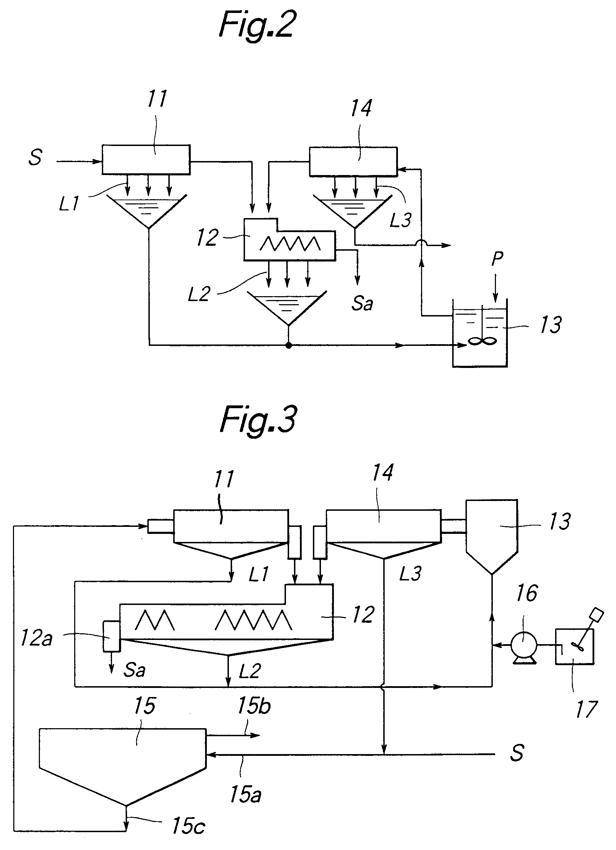

Fig. 2 is a schematic view showing a principal construction of a sludge treating system for performing the method according to the invention. A raw sludge wastes S discharged out of a factory is first processed by a clarifier not shown and solid substances are settled on a bottom of the clarifier. The settled sludge is supplied to a preliminary dewatering device 11 and a water contained in the sludge is discharged. The preliminary dewatering press 11 may be formed by a pre-thickener of a rotary screen type. The sludge discharged from the preliminary dewatering device 11 is supplied to a main dewatering device 12 which may be formed by a screw press. A waste water L1 discharged from the preliminary dewatering device 11 and a waste water L2 discharged out of the main dewatering device 12 are supplied into an agglutinating reaction tank 13, to which a macromolecular agglutinating reagent P is also supplied..

According to the invention, the waste waters L1 and L2 introduced into the agglutinating reaction tank 13 have been pressed so that they contain only a small amount of solid substances. Therefore, an amount of the macromolecular agglutinating agent supplied to the agglutinating reaction tank 13 can be made much smaller. In other words, the waste waters L1 and L2 introduced into the agglutinating reaction tank 13 can be efficiently processed by a smaller amount of the macromolecular agglutinating agent P. A sludge agglutinated in the agglutinating reaction tank 13 is treated by a preliminary dewatering device 14 and a sludge discharged out of the preliminary dewatering device 14 is then supplied to the main dewatering device 12 together with the sludge discharged out of the preliminary dewatering device 11. A waste water L3 discharged out of the second preliminary dewatering device 14 is supplied to the clarifier. The waste water L2 discharged out of the main dewatering device 12 is supplied to the agglutinating reaction tank 13. In this manner, the waste waters L1, L2 and L3 are repeatedly subjected to the dewatering process and the water contained in the raw sludge can be removed in an efficient manner, while a necessary amount of the expensive macromolecular agglutinating reagent can be reduced. A solid substance Sa discharged out of the main dewatering device 12 is finally treated in a usual manner and is discharged or burned at a predetermined waste treating site.

It should be noted in the embodiment illustrated in Fig. 2, the agglutinated sludge formed in the agglutinating reaction tank 13 is supplied to the main dewatering device 12 by means of the second preliminary dewatering device 14, but it may be directly introduced into the main dewatering device 12.

Fig. 3 is a schematic diagram showing the construction of the sludge treating apparatus according to the invention. In this embodiment, first and second preliminary dewatering devices 11 and 14 are formed by the pre-thickener of the rotary screen type and the main dewatering device 12 is constructed by the screw press. A reference numeral 15 denotes the clarifier and a reference numeral 16 represents a pump for supplying a measured amount of the macromolecular agglutinating agent P into the agglutinating reaction tank 13. In the clarifier 15, the raw sludge S is introduced therein by means of an inlet 15a, a supernatant is discharged out of the clarifier by means of a first outlet 15b, and a settled sludge is supplied to the first pre-thickener 11 by means of a second outlet 15c. In the screw press 12, the solid substance Sa is discharged from an outlet 12a.

In an experimental system for treating the sludge discharged out of the paper pulp manufacturing factory, the raw sludge S supplied to the first preliminary dewatering device 11 had a concentration of solid substances of about 4.4%, and a concentration of solid substances in the sludge supplied from the first preliminary dewatering device 11 into the main dewatering device 12 was increased to about 13%. A concentration of the waste water L1 discharged out of the first preliminary dewatering device 11 was 2.6% and a concentration of the waste water L2 discharged out of the main dewatering device 12 was 0.2%. A concentration of the sludge supplied from the second preliminary dewatering device 14 into the main dewatering device 12 was 8% and a concentration of the waste water supplied from the second dewatering device 14 into the clarifier 15 was 0.15%.

The present invention is not limited to the embodiments explained above, but various modifications and alternations may be conceived by those skilled in the art within the scope of the invention. For instance, in the above embodiment, the main dewatering device 12 is formed by the screw press, but it may be constructed by any other dewatering device such as a decant. Further, in the above embodiment, the sludge settle in the agglutinating reaction tank is supplied to the main dewatering device 12, but it may be supplied to another dewatering device by considering an amount of the raw sludge to be treated.

That is to say, an amount of the raw sludge is large as compared with the capacity of the main dewatering device 12, the settled sludge in the agglutinating reaction tank 13 may be further treated by another main dewatering device provided separately from the main dewatering device 12.

As explained above in detail, in the sludge treating method according to the invention, only the waste waters discharged out of the preliminary and main dewatering devices are supplied to the agglutinating reaction tank, and thus a necessary amount of the expensive macromolecular agglutinating reagent can be reduced materially, so that the running cost for processing the sludge can be decreased.

## Claims

1. A method of dewatering sludge wastes comprises the steps of:
supplying the sludge wastes into a preliminary dewatering device (11) to obtain a preliminarily dewatered sludge;
supplying said preliminarily dewatered sludge discharged out of said preliminary dewatering device (11) into a main dewatering device (12);
supplying a waste water discharged out of said preliminary dewatering device (11) and a waste water discharged out of said main dewatering device (12) into an agglutinating reaction tank (13);
supplying a macromolecular agglutinating agent into said agglutinating reaction tank (13) to form an agglutinated sludge; and
dewatering said agglutinated sludge formed in said agglutinating reaction tank (13).

2. A method according to claim 1, wherein said step of dewatering said agglutinated sludge formed in said agglutinating reaction tank (13) is performed by supplying the agglutinated sludge into said main dewatering device (12).

3. A method according to claim 1, wherein said step of dewatering said agglutinated sludge formed in said agglutinating reaction tank (13) is performed by supplying the agglutinated sludge into a second main dewatering device which is provided separately from said main dewatering device (12).

4. A method according to claim 2 or 3, wherein said agglutinated sludge formed in said agglutinated reaction tank (13) is supplied to said main dewatering device (12) or second main dewatering device by means of a second preliminary dewatering device (14).

5. A method according to claim 4, wherein prior to supplying the sludge wastes into the preliminary dewatering device (11), the sludge wastes are supplied into a clarifier (15) for settling solids in the sludge wastes, and settled sludge wastes formed on a bottom of the clarifier (13) are introduced into said preliminary dewatering device (11).

6. A method according to claim 5, wherein waste water discharged from said second preliminary dewatering device (14) is supplied to said clarifier (13).

7. A method according to claim 1, wherein in said preliminary dewatering device (11), the sludge wastes are dewatered by a thickener of a rotary screen type.

8. A method according to claim 1, wherein in said main dewatering device (12), said preliminarily dewatered sludge is treated by a screw press.

## Patentansprüche

1. Verfahren zum Entwässern von Schlammabfällen, das die Schritte aufweist:
Zuführen der Schlammabfälle in eine Vorentwässerungs-Vorrichtung (11), um einen vorentwässerten Schlamm zu erhalten;
Zuführen des vorentwässerten Schlamms, der aus der Vorentwässerungs-Vorrichtung (11) abgegeben ist, in eine Hauptentwässerungs-Vorrichtung (12);
Zuführen eines Abwassers, das aus der Vorentwässerungs-Vorrichtung (11) abgegeben ist, und eines Abwassers, das aus der Hauptentwässerungs-Vorrichtung (12) abgegeben ist, in einen Klebereaktionsbehälter (13);
Zuführen eines makromolekularen Klebemittels in den Klebereaktionsbehälter (13), um einen verklebten Schlamm zu bilden; und
Entwässern des verklebten Schlamms, der in dem Klebereaktionsbehälter (13) gebildet ist.

2. Verfahren gemäß Anspruch 1, wobei der Schritt eines Entwässerns des verklebten Schlamms, der in dem Klebereaktionsbehälter (13) gebildet ist, durch Zuführen des verklebten Schlamms in die Hauptentwässerungs-Vorrichtung (12) ausgeführt wird.

3. Verfahren nach Anspruch 1, wobei der Schritt eines Entwässerns des verklebten Schlamms, der in dem Klebereaktionsbehälter (13) gebildet ist, durch Zuführen des verklebten Schlamms in eine zweite Hauptentwässerungs-Vorrichtung durchgeführt wird, die separat von der Hauptentwässerungs-Vorrichtung (12) vorgesehen ist.

4. Verfahren nach Anspruch 2 oder 3, wobei der verklebte Schlamm, der in dem Klebereaktionsbehälter (13) gebildet ist, zu der Hauptentwässerungs-Vorrichtung (12) oder einer zweiten Hauptentwässerungs-Vorrichtung mittels einer zweiten Vorentwässerungs-Vorrichtung (14) zugeführt wird.

5. Verfahren nach Anspruch 4, wobei vor einem Zuführen der Schlammabfälle in die Vorentwässerungs-Vorrichtung (11) die Schlammabfälle in ein Klärgefäß (15) zum Absetzen von Feststoffen in den Schlammabfällen zugeführt wird und die abgesetzten Schlammabfälle, die auf dem Boden des Klärgefäßes (13) gebildet sind, in die Vorentwässerungs-Vorrichtung (11) eingeführt werden.

6. Verfahren nach Anspruch 5, wobei Schmutzwasser, das von der zweiten Vorentwässerungs-Vorrichtung (14) abgegeben ist, zu dem Klärgefäß (13) zugeführt wird.

7. Verfahren nach Anspruch 1, wobei in der Vorentwässerungs-Vorrichtung (11) die Schlammabfälle durch eine Eindickungseinrichtung vom Drehsiebtyp entwässert werden.

8. Verfahren nach Anspruch 1, wobei in der Hauptentwässerungs-Vorrichtung (11) der vorentwässerte Schlamm durch eine Spindelpresse behandelt wird.

## Revendications

1. Procédé de déshydratation de boues usées qui comprend les étapes consistant:
à introduire les boues usées dans un dispositif de déshydratation préliminaire (11) pour obtenir des boues préalablement déshydratées;
à introduire lesdites boues préalablement déshydratées évacuées dudit dispositif de déshydratation préliminaire (11) dans un dispositif de déshydratation principal (12);
à introduire des eaux usées évacuées dudit dispositif de déshydratation préliminaire (11) et des eaux usées évacuées dudit dispositif de déshydratation principal (12) dans un récipient de réaction d'agglutination (13);
à introduire un agent d'agglutination macromoléculaire dans ledit récipient de réaction d'agglutination (13) pour former des boues agglutinées; et
à déshydrater lesdites boues agglutinées formées dans ledit récipient de réaction d'agglutination (13).

2. Procédé selon la renvendication 1, dans lequel ladite étape consistant à déshydrater lesdites boues agglutinées formées dans ledit récipient de réaction d'agglutination (13) est réalisée en introduisant les boues agglutinées dans ledit dispositif de déshydratation principal (12).

3. Procédé selon la revendication 1, dans lequel ladite étape consistant à déshydrater lesdites boues agglutinées formées dans ledit récipient de réaction d'agglutination (13) est réalisée en introduisant les boues agglutinées dans un second dispositif de déshydratation principal qui est fourni séparément dudit dispositif de déshydratation principal (12).

4. Procédé selon la revendication 2 ou 3, dans lequel lesdites boues agglutinées formées dans ledit récipient de réaction d'agglutination (13) sont introduites dans ledit dispositif de déshydratation principal (12) ou second dispositif de déshydratation principal au moyen d'un second dispositif de déshydratation préliminaire (14).

5. Procédé selon la revendication 4, dans lequel avant d 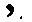 introduire les boues usées dans le dispositif de déshydratation préliminaire (11), les boues usées sont introduites dans un décanteur (15) pour laisser déposer des solides dans les boues usées, et les boues usées déposées formées au fond du décanteur (13) sont introduites dans ledit dispositif de déshydratation préliminaire (11).

6. Procédé selon la revendication 5, dans lequel les eaux usées évacuées dudit second dispositif de déshydratation préliminaire (14) sont introduites dans ledit décanteur (13).

7. Procédé selon la revendication 1, dans lequel dans ledit dispositif de déshydratation préliminaire (11), les boues usées sont déshydratées par un épaississeur d 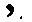 un type à tamis rotatif.

8. Procédé selon la revendication 1, dans lequel dans ledit dispositif de déshydratation principal (12), lesdites boues préalablement déshydratées sont traitées par une presse à vis.
